# FASCICULE DE BREVET EUROPEEN

(11) **EP 2 924 458 B1**
(45) Date de publication et mention de la délivrance du brevet: **19.07.2017**
(21) Numéro de dépôt: 15000825.8
(22) Date de dépôt: 20.03.2015
(51) Int. Cl.: G01S 13/93, G01S 17/89, G01S 17/93, G01S 13/89, G06T 17/05, G06K 9/00

(54) **Procédé de détection et de visualisation des obstacles artificiels d'un aéronef à voilure tournante**
VERFAHREN ZUR ERKENNUNG UND ANZEIGE VON KÜNSTLICHEN HINDERNISSEN EINES DREHFLÜGELFLUGZEUGS
METHOD FOR DETECTING AND DISPLAYING ARTIFICIAL OBSTACLES OF A ROTARY-WING AIRCRAFT

(30) Priorité: 28.03.2014 FR 1400762
(43) Date de publication de la demande: 30.09.2015
(73) Titulaire: Airbus Helicopters, 13725 Marignane Cedex (FR)
(72) Inventeur: Gillet, Marianne, 13127 Vitrolles (FR); Filias, François-Xavier, 13330 Pelissanne (FR); Pire, Richard, 13800 Istres (FR)
(74) Mandataire: GPI & Associés

(56) Documents cités:
- FR-A1- 2 888 944
- FR-A1- 2 953 316
- US-A1- 2011 144 942
- US-A1- 2011 282 581
- US-A1- 2013 202 197
- US-A1- 2013 257 852
- US-B1- 7 046 841
- US-B1- 8 565 958
- WIESEMANN T ET AL: "Multi-resolution terrain depiction on an embedded 2D/3D synthetic vision system", AEROSPACE SCIENCE AND TECHNOLOGY, ELSEVIER MASSON, FR, vol. 9, no. 6, 1 septembre 2005 (2005-09-01), pages 517-524, XP027845808, ISSN: 1270-9638 [extrait le 2005-09-01]
- RUDOLPH TRIEBEL ET AL: "Multi-Level Surface Maps for Outdoor Terrain Mapping and Loop Closing", INTELLIGENT ROBOTS AND SYSTEMS, 2006 IEEE/RSJ INTERNATIONAL CONFERENCE ON, IEEE, PI, 1 octobre 2006 (2006-10-01), pages 2276-2282, XP031006435, ISBN: 978-1-4244-0258-8
- AXELSSON P: "Processing of laser scanner data - Algorithms and applications", ISPRS JOURNAL OF PHOTOGRAMMETRY AND REMOTE SENSING, AMSTERDAM [U.A.] : ELSEVIER, AMSTERDAM, NL, vol. 54, no. 2-3, 1 juillet 1999 (1999-07-01), pages 138-147, XP009153174, ISSN: 0924-2716, DOI: 10.1016/S0924-2716(99)00008-8

## Description

La présente invention concerne un procédé de détection et de visualisation du sol et des obstacles artificiels se trouvant dans le champ de détection d'un moyen de détection embarqué à bord d'un véhicule et en particulier à bord d'un aéronef à voilure tournante.

Un tel procédé trouve une application préférentielle mais non limitative en étant associé à un moyen de détection, tel un détecteur du type LIDAR, acronyme correspondant à la désignation en langue anglaise « Llght Detection And Ranging », ou bien du type RADAR, acronyme correspondant à la désignation en langue anglaise « RAdio Detection And Ranging ». Un tel moyen de détection peut également être un système d'imagerie stéréoscopique ou bien en trois dimensions.

Il est requis d'un tel procédé, pour permettre la détection et la visualisation du sol, du relief et des obstacles artificiels tels qu'une tour, un pylône ou bien un câble électrique, d'être suffisamment fiable et rapide et notamment de traiter le plus rapidement possible les données détectées pour pouvoir délivrer en temps réel à un pilote humain ou automatique du véhicule de telles informations permettant de repérer des obstacles et de les éviter.

De telles informations de détection du sol et des obstacles fiables et rapides sont plus particulièrement nécessaires, voire essentielles au pilote d'un aéronef volant près du sol en conditions de visibilité dégradées afin de survoler et d'éviter les obstacles.

Il est connu d'obtenir, à partir d'un moyen de détection délivrant des échos élémentaires ou plots en fonction de son environnement, une base de données d'élévation de terrain de la zone observée par le moyen de détection. Cette base de données comprend le relief et les obstacles. Cependant, cette base de données à l'état brut comprend également des erreurs dues à de faux échos et il convient de les prendre en compte afin de les éliminer ou de les corriger.

On connait notamment le document FR 2888944 qui décrit un procédé de détection de la présence d'au moins un objet filiforme suspendu dans le champ de détection d'un télémètre avec le calcul des coordonnées terrestres de plots correspondant aux échos délivrés par le télémètre. Des plots candidats sont sélectionnés parmi ces plots et des segments de droites proches de projections verticales des plots candidats sont déterminés. Enfin, la recherche dans chaque plan vertical contenant un de ces segments de droite de portions de chaînettes dont sont proches des plots candidats se fait par transformée de Hough, l'utilisation d'une telle transformée de Hough ne conduisant cependant pas à un temps de traitement optimal.

Le document FR 2953300 décrit également un procédé de détection de la présence d'au moins un objet filiforme suspendu en utilisant la méthode des moindres carrés qui permet de réduire les temps de calcul.

De plus, on connait le document FR 2953316 qui décrit un procédé de détection du relief et des obstacles permettant d'éliminer les erreurs de détection dues à de faux échos. Un faux écho est notamment identifié lorsqu'un plot isolé est détecté.

En outre, le document US 7046841 décrit une méthode et un système d'analyse et de détection de l'environnement par détection laser en trois dimensions. Ces informations en trois dimensions sont décomposées par éléments finis, une valeur propre et un vecteur propre étant associés à chaque élément fini selon les caractéristiques de l'élément détecté, par exemple le relief, de la végétation, un bâtiment ou encore un câble électrique. Ainsi, chaque élément extérieur peut être identifié.

Enfin, le document US 2013/0257852 décrit un système de vision synthétique de l'environnement d'un véhicule en distinguant notamment les objets attachés au sol et les objets détachés du sol. Ce système comporte une base de données du sol et des obstacles attachés et détachés du sol, un moyen de détection, par exemple de type LIDAR, un moyen de calcul et un moyen d'affichage. Des surfaces perçues du terrain sont ainsi affichées à partir des informations de la base de données en intégrant les objets attachés au sol ainsi que les obstacles correspondant aux objets détachés du sol.

Par ailleurs, l'arrière plan technologique du domaine technique de l'invention comporte plusieurs documents dont le document US 2011/0282581, le document US 2013/022197 et le document US 8565958. Cet arrière plan technologique comporte également les publications de Thomas Wiesemann « Multi-resolution terrain depiction on an embedded 2D/3D synthetic vision system », de septembre 2005, AEROPSPACE SCIENCE and TECHNOLOGY, ELSEVIER, de Rudolph Triebel, « Multi-level surface maps for outdoor terrain mapping and loop closing », de octobre 2006, INTERNATIONAL CONFERENCE on INTELLIGENT ROBOTS and SYSTEMS, IEEE et de Peter Axelsson, « Processing of laser scanner data - algorithms and applications », de juillet 1999, PHOTOGRAMMETRY AND REMOTE SENSING, ELSEVIER.

Cependant, de tels systèmes à base de moyens de détection, de traitement d'images et de reconnaissance de formes mobilisent des ressources de calcul et demandent des temps de calcul importants. La reconnaissance des formes détectées ainsi que l'affichage détaillé de ces formes sont notamment consommateurs de ressources de calcul et générateurs de temps de calcul.

L'invention propose de présenter à l'équipage d'un véhicule, et en particulier à son pilote, de façon simple une vision du sol et des obstacles artificiels se trouvant à proximité tout en limitant l'utilisation des ressources de calcul du véhicule et en réduisant les temps de calcul. Ce véhicule est par exemple un aéronef à voilure tournante.

L'invention a pour objet un procédé de détection et de visualisation du sol et des obstacles à partir d'un moyen de détection embarqué à bord d'un véhicule. Ce moyen de détection envoie dans l'environnement du véhicule et notamment en direction du sol des signaux de mesures et reçoit une pluralité de plots élémentaires Pe exprimés sous forme de coordonnées tridimensionnelles. Ces plots élémentaires Pe correspondent à des retours de ces signaux de mesures suite à leurs rencontres avec le sol ou bien un obstacle artificiel quelconque tel qu'un bâtiment, un pylône ou encore un câble électrique par exemple.

Ces obstacles artificiels sont également désignés par l'expression « obstacles hors sol » car ils sont distincts et séparés du sol proprement dit.

Ces plots élémentaires Pe sont ainsi représentatifs d'au moins une partie de l'environnement du véhicule et capables de former une image de cet environnement.

Ce procédé de détection et de visualisation du sol et des obstacles comprend plusieurs étapes :
- une première étape de maillage du sol en deux dimensions selon un plan horizontal avec des mailles sol Ms(i,j), chaque maille sol Ms(i,j) étant formée par un plot élémentaire Pe d'altitude Z_{Pe}, ce plot élémentaire Pe étant le plot élémentaire Pe correspondant à cette maille sol Ms(i,j) dont l'altitude Z_{Pe} est une altitude minimale Zmin(i,j),
- une seconde étape de création d'un réseau de plots obstacles Poₙ(i,j), chaque plot élémentaire Pe correspondant à une même maille sol Ms(i,j) et ayant une altitude Z_{Pe} supérieure à l'altitude minimale Zmin(i,j) de cette maille sol Ms(i,j) formant un plot obstacle Poₙ(i,j),
- une troisième étape de mémorisation de ces mailles sol Ms(i,j), chaque maille sol Ms(i,j) étant mémorisée avec l'altitude minimale Zmin(i,j),
- une quatrième étape de mémorisation de ces plots obstacles Poₙ(i,j), chaque plot obstacle Poₙ(i,j) étant mémorisé avec une altitude Zₙ(i,j) égale à son altitude Z_{Pe},
- une cinquième étape de comparaison de chaque maille sol Ms(i,j) avec chaque plot élémentaire Pe nouvellement reçu d'altitude Z_{Pe} et correspondant à cette maille sol Ms(i,j) telle que,
   ∘ si aucune altitude minimale Zmin(i,j) n'est mémorisée pour cette maille sol Ms(i,j), l'altitude Z_{Pe} de ce plot élémentaire Pe nouvellement reçu est mémorisée pour cette maille sol Ms(i,j) en tant qu'altitude minimale Zmin(i,j),
   ∘ si l'altitude Z_{Pe} de ce plot élémentaire Pe nouvellement reçu est supérieure à l'altitude minimale Zmin(i,j) de cette maille sol Ms(i,j), le plot élémentaire Pe nouvellement reçu est mémorisé en tant que plot obstacle Poₙ(i,j), l'altitude Z_{Pe} de ce plot élémentaire Pe nouvellement reçu étant l'altitude Zₙ(i,j) associée à ce plot obstacle Poₙ(i,j), l'altitude minimale Zmin(i,j) de cette maille sol Ms(i,j) étant inchangée,
   ∘ si l'altitude Z_{Pe} de ce plot élémentaire Pe nouvellement reçu est inférieure à l'altitude minimale Zmin(i,j) de cette maille sol Ms(i,j), un plot obstacle Poₙ(i,j) est mémorisé avec une altitude Zₙ(i,j) égale à cette altitude minimale Zmin(i,j) de cette maille sol Ms(i,j) et l'altitude Z_{Pe} de ce plot élémentaire Pe nouvellement reçu est mémorisée en tant que nouvelle altitude minimale Zmin(i,j) de cette maille sol Ms(i,j), et
   ∘ si l'altitude Z_{Pe} de ce plot élémentaire Pe nouvellement reçu est égale à l'altitude minimale Zmin(i,j) de cette maille sol Ms(i,j), ce plot élémentaire Pe nouvellement reçu est ignoré,
- une sixième étape d'affichage des mailles sol Ms(i,j) et/ou des plots obstacles Poₙ(i,j).

Le moyen de détection présent dans le véhicule et nécessaire pour la mise eu oeuvre du procédé selon l'invention envoie des signaux de mesures dans l'environnement du véhicule, de préférence dans une zone en avant du véhicule et dans sa direction d'avancement. Ces signaux de mesures sont notamment dirigés vers le sol et les obstacles hors sol. Ainsi, une pluralité de plots élémentaires Pe correspondant à des retours de ces signaux de mesures suite à leurs rencontres avec le sol et/ou un obstacle hors sol sont reçus par ce moyen de détection. Ces plots élémentaires Pe peuvent alors former une image de cet environnement.

Ces plots élémentaires Pe sont notamment représentatifs du sol. En effet, les plots élémentaires Pe dont l'altitude Z_{Pe} est la plus faible constituent à priori le sol. Afin de limiter l'utilisation de ressources de calcul et réduire les temps de calcul, le sol est représenté par le procédé selon l'invention comme un plan horizontal, c'est-à-dire uniquement selon deux dimensions.

Ce plan horizontal est décomposé en mailles sol permettant ainsi de quadriller le sol. Chaque maille sol Ms(i,j) est caractérisée par une abscisse i et une ordonnée j dans le plan horizontal.

De plus, chaque maille sol Ms(i,j) comporte un seul plot élémentaire Pe caractérisant l'altitude du sol sur la surface de cette maille sol Ms(i,j). Ce plot élémentaire Pe est le plot élémentaire parmi l'ensemble des plots élémentaires correspondant à cette maille sol Ms(i,j) dont l'altitude Z_{Pe} est la plus faible. Cette altitude Z_{Pe} est donc l'altitude minimale Zmin(i,j) et caractérise la maille sol Ms(i,j).

Chaque maille sol Ms(i,j) a de préférence la forme d'un carré. Par exemple, chaque côté de ce carré correspond à 10 mètres (10m) au sol.

En outre, les dimensions de ce carré peuvent également varier selon la position du véhicule par rapport au sol et plus particulièrement sa hauteur par rapport au sol. En effet, lorsque le véhicule est à une hauteur importante par rapport au sol, il n'est pas nécessaire d'avoir une maille sol Ms(i,j) précise, c'est-à-dire correspondant à une faible surface au sol. Par contre, lorsque le véhicule se rapproche du sol, les dimensions de la maille sol Ms(i,j) peuvent diminuer afin de réduire la surface au sol correspondant à cette maille sol Ms(i,j) et augmenter ainsi la précision de cette maille sol Ms(i,j) et, par suite, la précision de la présentation du sol et des obstacles hors sol. De plus, le risque de présence d'obstacles hors sol augmente également lorsque le véhicule se rapproche du sol. De fait, les dimensions d'une maille sol Ms(i,j) peuvent diminuer de façon dynamique au fur et à mesure que la hauteur du véhicule par rapport au sol diminue.

De même, les dimensions des mailles sol Ms(i,j) situées loin devant le véhicule peuvent être plus importantes que les mailles sol Ms(i,j) situées proches. Ainsi, les dimensions d'une maille sol Ms(i,j) peuvent diminuer de façon dynamique au fur et à mesure que le véhicule s'en rapproche.

Avantageusement, l'utilisation de mailles sol Ms(i,j) dont les dimensions varient de façon dynamique permet d'optimiser les ressources de calcul ainsi que le temps de calcul. Ces ressources de calcul peuvent ainsi être utilisées lorsque cela est réellement nécessaire, c'est-à-dire essentiellement pour les mailles sol Ms(i,j) situées proches du véhicule.

Par ailleurs, les plots élémentaires Pe sont également représentatifs des obstacles hors sol situés à proximité ou bien sur la route du véhicule. En effet, à chaque maille sol Ms(i,j) est associé un seul plot élémentaire Pe d'altitude minimale Zmin(i,j). Les autres plots élémentaires Pe dont la localisation les situe sur cette même maille sol Ms(i,j) ont une altitude Z_{Pe} qui est supérieure à l'altitude minimale Zmin(i,j). Ces autres plots élémentaires Pe correspondent probablement à des obstacles hors sol et forment alors des plots obstacles Poₙ(i,j) associés à cette maille sol Ms(i,j) et caractérisés par leurs altitudes Zₙ(i,j) respectives, chaque altitude Zₙ(i,j) étant égale à l'altitude Z_{Pe} du plot élémentaire Pe correspondant.

Cependant, si un plot élémentaire Pe a une altitude Z_{Pe} égale à l'altitude minimale Zmin(i,j) caractérisant cette maille sol Ms(i,j), ce plot élémentaire Pe est ignoré car il correspond au sol qui est déjà caractérisé par cette maille sol Ms(i,j).

Ensuite, chaque maille sol Ms(i,j) est mémorisée avec l'altitude minimale Zmin(i,j) qui la caractérise. De même, chaque plot obstacle Poₙ(i,j) est mémorisé avec son altitude Zₙ(i,j) qui le caractérise. Ces mises en mémoire des mailles sol Ms(i,j) et des plots obstacles Poₙ(i,j) peuvent être simultanées ou bien séquentielles. De plus, les mailles sol Ms(i,j) et les plots obstacles Poₙ(i,j) peuvent être stockés dans un moyen de mémorisation commun ou bien dans des moyens de mémorisation distincts.

Le moyen de détection envoie des signaux de mesures et reçoit des plots élémentaires Pe à intervalle de temps de préférence régulier afin d'analyser l'environnement du véhicule. De fait, le moyen de détection reçoit de façon régulière de nouveaux plots élémentaires Pe correspondant à un nouveau balayage de l'environnement par le moyen de détection.

Le procédé de détection et de visualisation du sol et des obstacles selon l'invention permet alors de prendre en compte chaque plot élémentaire Pe nouvellement reçu et de le comparer à la maille sol Ms(i,j) à laquelle il correspond. Le procédé selon l'invention compare en particulier l'altitude Z_{Pe} de chaque plot élémentaire Pe nouvellement reçu et l'altitude minimale Zmin(i,j) de la maille sol Ms(i,j) correspondante.

Si aucune altitude minimale Zmin(i,j) n'était mémorisée préalablement pour cette maille sol Ms(i,j), ce plot élémentaire Pe nouvellement reçu est le premier plot élémentaire Pe correspondant à cette maille sol Ms(i,j). Ce plot élémentaire Pe nouvellement reçu est alors considéré comme constituant le sol. L'altitude Z_{Pe} de ce plot élémentaire Pe nouvellement reçu est alors mémorisée pour cette maille sol Ms(i,j) en tant qu'altitude minimale Zmin(i,j).

Si ce plot élémentaire Pe nouvellement reçu a une altitude Z_{Pe} supérieure à l'altitude minimale Zmin(i,j) de cette maille sol Ms(i,j), ce plot élémentaire Pe nouvellement reçu correspond probablement à un obstacle hors sol. Le plot élémentaire Pe nouvellement reçu est alors mémorisé en tant que plot obstacle Poₙ(i,j) auquel est associée l'altitude Zₙ(i,j) qui est égale à l'altitude Z_{Pe} de ce plot élémentaire Pe nouvellement reçu. L'altitude minimale Zmin(i,j) de cette maille sol Ms(i,j) est inchangée.

Si ce plot élémentaire Pe nouvellement reçu a une altitude Z_{Pe} inférieure à l'altitude minimale Zmin(i,j) de cette maille sol Ms(i,j), ce plot élémentaire Pe nouvellement reçu correspond probablement au sol, le plot élémentaire Pe ayant préalablement été utilisé pour constituer la maille sol Ms(i,j) étant en fait un obstacle hors sol. De fait, un plot obstacle Poₙ(i,j) correspondant à cet obstacle hors sol est mémorisé avec une altitude Zₙ(i,j) égale à l'altitude minimale Zmin(i,j) préalablement associée à cette maille sol Ms(i,j). L'altitude Z_{Pe} de ce plot élémentaire Pe nouvellement reçu est alors mémorisée en tant que nouvelle altitude minimale Zmin(i,j) de cette maille sol Ms(i,j).

Enfin, si ce plot élémentaire Pe nouvellement reçu a une altitude Z_{Pe} égale à l'altitude minimale Zmin(i,j) de cette maille sol Ms(i,j), ce plot élémentaire Pe nouvellement reçu est ignoré.

Ainsi, chaque nouveau plot élémentaire Pe reçu alimente au fur et à mesure de sa réception chaque moyen de mémorisation. De fait, un maillage du sol selon un plan en deux dimensions caractérisé par les mailles sol Ms(i,j) ainsi qu'un réseau de plots obstacles Poₙ(i,j) sont obtenus.

De la sorte, les mailles sol Ms(i,j) et/ou les plots obstacles Poₙ(i,j) peuvent être présentés à l'équipage du véhicule de façon simple sur un moyen d'affichage, c'est-à-dire respectivement sous la forme d'un maillage représentatif du sol et d'un réseau de plots obstacles Poₙ(i,j). Il est alors à la charge de cet équipage d'analyser et d'interpréter ce réseau de plots obstacles Poₙ(i,j) afin d'identifier les obstacles hors sol auxquels ils correspondent, par exemple des obstacles filaires tels des câbles électriques ou bien des pylônes.

L'équipage peut également, selon la visibilité extérieure, s'aider de ce qu'il voit réellement dans l'environnement du véhicule en plus de ce qu'il voit sur le moyen d'affichage afin de reconnaître la forme de ces obstacles.

Avantageusement, les plots obstacles Poₙ(i,j) sont affichés sans autres traitements que ceux préalablement décrits, et notamment sans traitement d'images et de reconnaissances de formes. Par suite, le procédé de détection et de visualisation du sol et des obstacles selon l'invention permet d'afficher en temps réel les plots obstacles Poₙ(i,j) en limitant l'utilisation des ressources de calcul du véhicule et les temps de calcul.

Le moyen d'affichage peut être un écran affichant en deux dimensions et en perspective le maillage représentatif du sol et le réseau des plots obstacles Poₙ(i,j) ou bien un écran affichant ces éléments en trois dimensions. Le moyen d'affichage peut également être un affichage tête moyenne ou tête haute. De plus, afin d'en faciliter la perception par l'équipage du véhicule, les plots obstacles Poₙ(i,j) peuvent être affichés sous la forme de points colorés, de couleur ambre par exemple.

Selon deux variantes du procédé selon l'invention, des conditions d'affichage sont ajoutées aux plots obstacles Poₙ(i,j) selon leur altitude Zₙ(i,j) pour permettre ou non leur présentation sur le moyen d'affichage.

En effet, un plot obstacle Poₙ(i,j) situé à très basse altitude peut être issu d'un écho des signaux de mesures et/ou d'un plot élémentaire ne correspondant pas réellement à un obstacle hors sol. De plus, un véhicule, y compris un aéronef à voilure tournante, n'évolue pas si près du sol, hors phase d'atterrissage. En outre, lors d'une phase d'atterrissage, le pilote effectue cet atterrissage à vue et n'utilise pas uniquement les informations que lui fournit un moyen d'affichage. De fait, les plots obstacles Poₙ(i,j) situés à très basse altitude peuvent ne pas être présentés à l'équipage du véhicule sur le moyen d'affichage.

Ainsi, selon une première variante du procédé selon l'invention, chaque plot obstacle Poₙ(i,j) ayant une différence d'altitude, entre l'altitude Zₙ(i,j) de ce plot obstacle Poₙ(i,j) et l'altitude minimale Zmin(i,j) de la maille sol Ms(i,j) correspondant à ce plot obstacle Poₙ(i,j), inférieure à un premier seuil est ignoré lors de la sixième étape d'affichage et, par suite, non présenté sur le moyen d'affichage. Le premier seuil est par exemple égal à 30 pieds (30 ft).

De même, un plot obstacle Poₙ(i,j) situé à haute altitude n'est pas créé par un obstacle hors sol, qui ne se trouve pas à de telles altitudes, mais est plus probablement généré par un nuage qui renvoie les signaux de mesures émis par le moyen de détection générant ainsi un ou plusieurs plots élémentaires Pe. De fait, les plots obstacles Poₙ(i,j) situés à haute altitude peuvent ne pas être présentés à l'équipage du véhicule sur le moyen d'affichage.

Ainsi, selon une seconde variante du procédé selon l'invention, chaque plot obstacle Poₙ(i,j) ayant une différence d'altitude, entre l'altitude Zₙ(i,j) de ce plot obstacle Poₙ(i,j) et l'altitude minimale Zmin(i,j) de la maille sol Ms(i,j) correspondant à ce plot obstacle Poₙ(i,j), supérieure à un second seuil est ignoré lors de la sixième étape d'affichage et, par suite, non présenté sur le moyen d'affichage. Le second seuil est par exemple égal à 500 pieds (500 ft).

Par ailleurs, le maillage représentatif du sol peut être formé par les mailles sol Ms(i,j) en prenant en compte l'altitude minimale Zmin(i,j) associée à chaque maille sol Ms(i,j). Ainsi, l'ensemble des mailles sol Ms(i,j) forme un maillage en trois dimensions représentant le sol.

En outre, chaque maille sol Ms(i,j) peut être formée initialement à l'aide d'un modèle numérique de terrain MNT et l'altitude minimale Zmin(i,j) initiale de cette maille sol Ms(i,j) est l'altitude du modèle numérique de terrain MNT.

Un modèle numérique de terrain MNT est par exemple un modèle désigné par l'acronyme DTED désignant en langue anglaise « Digital Terrain Elevation Data ». Un tel modèle DTED fournit les élévations maximales du terrain relevées sur des mailles géographiques qui sont relativement larges.

Par ailleurs, les coordonnées tridimensionnelles des plots élémentaires Pe sont tout d'abord connues, suite à leur réception par le moyen de détection embarqué dans le véhicule, dans un repère lié à ce moyen de détection et, de fait, dans un repère lié au véhicule. Le procédé de détection et de visualisation du sol et des obstacles selon l'invention peut utiliser ces coordonnées des plots élémentaires Pe dans un repère lié au véhicule.

Cependant, le maillage du sol par le procédé selon l'invention est de préférence effectué dans un repère géographique terrestre local, c'est-à-dire fixe par rapport au globe terrestre. Par suite, ces coordonnées des plots élémentaires Pe doivent être transformées pour être données dans ce repère géographique terrestre. Chaque plot élémentaire Pe, chaque maille sol Ms(i,j) et chaque plot obstacle Poₙ(i,j) sont ainsi fixes dans un tel repère géographique terrestre. Dans ce cas, une étape préliminaire de transformation des coordonnées des plots élémentaires Pe est réalisée préalablement à la première étape.

Par exemple, dans un repère lié au véhicule, les coordonnées d'un plot élémentaire Pe sont établies en coordonnées sphériques en fonction du site, du gisement et de la distance alors que, dans un repère géographique, ces coordonnées sont la latitude, la longitude et l'altitude de ce plot élémentaire Pe. Une telle transformation des coordonnées d'un plot élémentaire Pe d'un repère lié au véhicule à un repère géographique terrestre est connue et par exemple décrite dans le document FR 2953316.

L'invention a également pour objet un programme comportant un code fixé sur un support ou matérialisé par un signal, le code étant lisible ou exécutable par une unité de traitement de données destinée à équiper un véhicule afin de traiter une pluralité de plots élémentaires Pe reçus par un moyen de détection. Ce code comporte des segments de code afin d'effectuer les différentes étapes du procédé de détection et de visualisation du sol et des obstacles précédemment décrit.

L'invention a enfin pour objet un dispositif de détection et de visualisation du sol et des obstacles pour la mise en oeuvre du procédé de détection et de visualisation du sol et des obstacles précédemment décrit. Ce dispositif, destiné à équiper un véhicule, comprend un moyen de détection qui envoie dans l'environnement du véhicule des signaux de mesures et reçoit une pluralité de plots élémentaires Pe, un système de référence et de cap, un système de localisation ainsi qu'une unité de traitement, au moins un moyen de mémorisation et un moyen d'affichage.

Ce dispositif de détection et de visualisation du sol et des obstacles est ainsi capable de mettre en oeuvre le procédé de détection et de visualisation du sol et des obstacles précédemment décrit.

L'unité de traitement permet notamment, grâce aux informations fournies par le système de référence et de cap ainsi que le système de localisation, de transformer les coordonnées tridimensionnelles des plots élémentaires Pe d'un repère lié au véhicule à un repère géographique terrestre.

De plus, l'unité de traitement est reliée à chaque moyen de mémorisation dans lequel sont stockés les mailles sol Ms(i,j) avec les altitudes minimales Zmin(i,j) et les plots obstacles Poₙ(i,j) avec leur altitude Zₙ(i,j) respectives.

L'invention et ses avantages apparaîtront avec plus de détails dans le cadre de la description qui suit avec des exemples donnés à titre illustratif en référence aux figures annexées qui représentent :
- la figure 1, un aéronef à voilure tournante équipé d'un dispositif de détection et de visualisation du sol et des obstacles,
- la figure 2, un schéma synoptique d'un procédé de détection et de visualisation du sol et des obstacles, et
- les figures 3 et 4, deux représentations du plan horizontal représentatif du sol sans et avec obstacles hors sol.

Les éléments présents dans plusieurs figures distinctes sont affectés d'une seule et même référence.

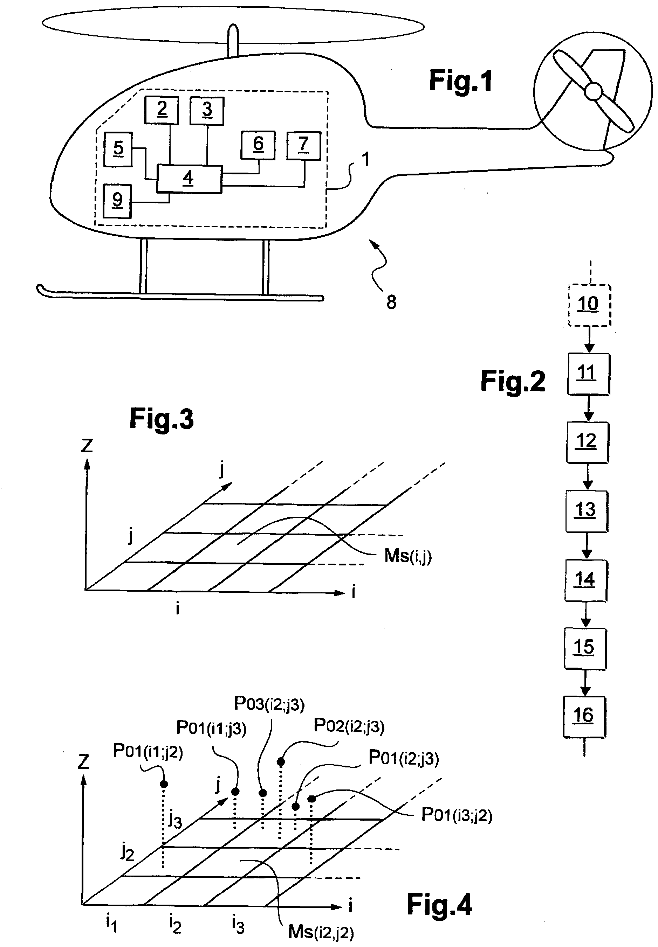

La figure 1 représente un aéronef 8 à voilure tournante équipé d'un dispositif 1 de détection et de visualisation du sol et des obstacles. Ce dispositif 1 de détection et de visualisation du sol et des obstacles comprend un moyen de détection 9, un système de référence et de cap 2, un système de localisation 3 ainsi qu'une unité de traitement 4, un premier et un second moyens de mémorisation 6,7 et un moyen d'affichage 5.

La figure 2 représente un schéma synoptique d'un procédé de détection et de visualisation du sol et des obstacles. Ce procédé comporte plusieurs étapes et peut être mis en oeuvre par le dispositif 1 afin de détecter, puis de visualiser le sol et les obstacles artificiels hors sol situés dans l'environnement de l'aéronef 8.

Le moyen de détection 9 envoie des signaux de mesures dans l'environnement de l'aéronef 8, de préférence dans une zone en avant de l'aéronef 8 et dans sa direction d'avancement. Ces signaux de mesures sont plus particulièrement dirigés vers le sol et les obstacles hors sol. Une pluralité de plots élémentaires Pe sont reçus par ce moyen de détection et correspondent à des retours de ces signaux de mesures suite à leurs rencontres avec le sol et/ou un obstacle hors sol. Ces plots élémentaires Pe peuvent ainsi caractériser l'environnement de l'aéronef 8.

Le moyen de détection 9 peut être un détecteur à balayage du type LIDAR ou RADAR, ou bien un système d'imagerie stéréoscopique ou en trois dimensions.

Par ailleurs, les plots élémentaires Pe reçus par le moyen de détection 9 sont définis par des coordonnées tridimensionnelles dans un repère lié à ce moyen de détection 9 et à l'aéronef 8. Le procédé de détection et de visualisation du sol et des obstacles peut utiliser ces coordonnées des plots élémentaires Pe dans un tel repère lié à l'aéronef 8.

Cependant, le procédé de détection et de visualisation du sol et des obstacles peut également comporter une étape préliminaire 10 de transformation de ces coordonnées des plots élémentaires Pe d'un repère lié à l'aéronef 8 vers un repère géographique terrestre.

Au cours de cette étape préliminaire 10, l'unité de traitement 4 qui est notamment reliée au moyen de détection 9, au système de localisation 3 et au système de référence et de cap 2 utilise des informations d'évolution ainsi que des informations de localisation de l'aéronef 8 dans un repère géographique terrestre pour réaliser cette transformation de ces coordonnées des plots élémentaires Pe. On entend notamment par informations d'évolution les vitesses et le cap de l'aéronef 8.

Ensuite, au cours d'une première étape 11 de maillage du sol en deux dimensions, des mailles sol Ms(i,j) sont déterminées. Ces mailles sol Ms(i,j) permettent de quadriller le sol et de former un plan horizontal. Un tel plan horizontal formé de mailles sol Ms(i,j) est représenté sur la figure 3, chaque maille sol Ms(i,j) étant caractérisée par une abscisse i et une ordonnée j dans le plan horizontal.

Chaque maille sol Ms(i,j) couvre une surface au sol et a de préférence la forme d'un carré. Chaque maille sol Ms(i,j) peut avoir des dimensions fixes, chaque maille sol Ms(i,j) étant par exemple un carré dont les côtés correspondent à 10 mètres (10m) au sol.

Chaque maille sol Ms(i,j) peut également avoir des dimensions qui varient selon la position de l'aéronef 8 par rapport au sol. Par exemple, les dimensions de chaque maille sol Ms(i,j) diminue au fur et à mesure que l'aéronef se rapproche de cette maille sol Ms(i,j). Ainsi, la précision d'une maille sol Ms(i,j) et, par suite, de la présentation du sol et des obstacles hors sol augmente lorsque l'aéronef 8 se rapproche de cette maille sol Ms(i,j).

Chaque maille sol Ms(i,j) est constituée par un seul plot élémentaire Pe d'altitude Z_{Pe}, ce plot élémentaire Pe étant le plot élémentaire Pe correspondant à cette maille sol Ms(i,j) dont l'altitude Z_{Pe} est la plus faible. En effet, ce plot élémentaire Pe, dont l'altitude Z_{Pe} est la plus faible, constitue à priori le sol pour la surface du sol représentée par cette maille sol Ms(i,j). Par suite, l'altitude minimale Zmin(i,j) associée à cette maille sol Ms(i,j) est l'altitude Z_{Pe} de ce plot élémentaire Pe.

Ainsi, chaque maille sol Ms(i,j) étant associée à une altitude minimale Zmin(i,j), l'ensemble des mailles sol Ms(i,j) caractérise bien le sol en prenant en compte une altitude du sol pour chaque maille sol Ms(i,j) bien que ces mailles sol Ms(i,j) forment un plan horizontal, donc en deux dimensions.

Puis, au cours d'une seconde étape 12 de création d'un réseau de plots obstacles Poₙ(i,j), des plots obstacles Poₙ(i,j) sont déterminés à partir des plots élémentaires Pe ne caractérisant pas une maille sol Ms(i,j). En effet, chaque plot élémentaire Pe situé sur une même maille sol Ms(i,j) et qui a une altitude Z_{Pe} supérieure à l'altitude minimale Zmin(i,j) de cette maille sol Ms(i,j) est probablement représentatif d'un obstacle hors sol.

Dès lors, chaque plot élémentaire Pe dont l'altitude Z_{Pe} est supérieure à l'altitude minimale Zmin(i,j) de la maille sol Ms(i,j) à laquelle il correspond constitue alors un plot obstacle Poₙ(i,j) associé à cette maille sol Ms(i,j) et caractérisé par une altitude Zₙ(i,j). Cette altitude Zₙ(i,j) est égale à l'altitude Z_{Pe} de ce plot élémentaire Pe.

De la sorte, les plots obstacles Poₙ(i,j) peuvent être caractérisés par une altitude Zₙ(i,j) associée à une maille sol Ms(i,j) et par leurs coordonnées tridimensionnelles dans le repère géographique terrestre.

Par contre, au cours de cette seconde étape 12, si un plot élémentaire Pe à une altitude Z_{Pe} égale à l'altitude minimale Zmin(i,j) caractérisant cette maille sol Ms(i,j), ce plot élémentaire Pe est ignoré.

La figure 4 représente d'une part un plan horizontal formé de mailles sol Ms(i,j) et d'autre part plusieurs plots obstacles Poₙ(i,j). On constate par exemple qu'un seul plot obstacle Po₁(i₁,j₂) est associé à la maille sol Ms(i₁,j₂), de même que pour les mailles sol Ms(i₁,j₃) et Ms(i₃,j₂). Par contre, trois plots obstacles Po₁(i₂,j₃),Po₂(i₂,j₃),Po₃(i₂,j₃) sont associés à la maille sol Ms(i₂,j₃).

Au cours d'une troisième étape 13 de mémorisation des mailles sol Ms(i,j), chaque maille sol Ms(i,j) est mémorisée avec l'altitude minimale Zmin(i,j) dans le premier moyen de mémorisation 6.

Au cours d'une quatrième étape 14 de mémorisation des plots obstacles Poₙ(i,j), chaque plot obstacle Poₙ(i,j) est mémorisé avec une altitude Zₙ(i,j) dans le second moyen de mémorisation 7.

Ces troisième et quatrième étapes 13,14 peuvent être simultanées ou bien séquentielles. De plus, le premier moyen de mémorisation 6 et le second moyen de mémorisation 7 peuvent former un même moyen de mémorisation commun, les mailles sol Ms(i,j) et les plots obstacles Poₙ(i,j) étant alors stockés dans ce moyen de mémorisation commun.

Par la suite, au cours d'une cinquième étape 15 de comparaison, on compare chaque maille sol Ms(i,j) avec chaque plot élémentaire Pe nouvellement reçu d'altitude Z_{Pe} et correspondant à cette maille sol Ms(i,j) afin de déterminer si ce plot élémentaire Pe nouvellement reçu peut constituer potentiellement un obstacle hors sol ou s'il correspond au sol.

En effet, le moyen de détection 9 envoie des signaux de mesures et reçoit en retour des plots élémentaires Pe à intervalle de temps de préférence régulier. De fait, le moyen de détection 9 reçoit régulièrement de nouveaux plots élémentaires Pe correspondant à un nouveau balayage de l'environnement de l'aéronef 8.

Au cours de cette cinquième étape 15 de comparaison, on compare plus particulièrement l'altitude minimale Zmin(i,j) de chaque maille sol Ms(i,j) avec l'altitude Z_{Pe} de chaque plot élémentaire Pe nouvellement reçu correspondant à cette maille sol Ms(i,j).

Si aucune altitude minimale Zmin(i,j) n'était mémorisée préalablement pour cette maille sol Ms(i,j), ce plot élémentaire Pe nouvellement reçu est le premier plot élémentaire Pe correspondant à cette maille sol Ms(i,j) et on considère qu'il correspond au sol. L'altitude Z_{Pe} de ce plot élémentaire Pe nouvellement reçu est alors mémorisée pour cette maille sol Ms(i,j) en tant qu'altitude minimale Zmin(i,j).

Si ce plot élémentaire Pe nouvellement reçu a une altitude Z_{Pe} supérieure à l'altitude minimale Zmin(i,j) de cette maille sol Ms(i,j), ce plot élémentaire Pe nouvellement reçu correspond probablement à un obstacle hors sol. Le plot élémentaire Pe nouvellement reçu est alors mémorisé en tant que plot obstacle Poₙ(i,j) auquel est associée l'altitude Zₙ(i,j) qui est égale à l'altitude Z_{Pe} de ce plot élémentaire Pe nouvellement reçu. L'altitude minimale Zmin(i,j) de cette maille sol Ms(i,j) est inchangée.

Si ce plot élémentaire Pe nouvellement reçu a une altitude Z_{Pe} inférieure à l'altitude minimale Zmin(i,j) de cette maille sol Ms(i,j), ce plot élémentaire Pe nouvellement reçu correspond probablement au sol, le plot élémentaire Pe ayant préalablement été utilisé pour constituer la maille sol Ms(i,j) étant en fait un obstacle hors sol. De fait, un plot obstacle Poₙ(i,j) correspondant à cet obstacle hors sol est mémorisé avec une altitude Zₙ(i,j) égale à l'altitude minimale Zmin(i,j) préalablement associée à cette maille sol Ms(i,j). L'altitude Z_{Pe} de ce plot élémentaire Pe nouvellement reçu est alors mémorisée en tant que nouvelle altitude minimale Zmin(i,j) de cette maille sol Ms(i,j).

Si ce plot élémentaire Pe nouvellement reçu a une altitude Z_{Pe} égale à l'altitude minimale Zmin(i,j) de cette maille sol Ms(i,j), ce plot élémentaire Pe nouvellement reçu est ignoré.

Ainsi, les nouveaux plots élémentaires Pe reçus alimentent au fur et à mesure de leurs réceptions chaque moyen de mémorisation 6,7 en fonction de leurs altitudes Z_{Pe}. De fait, un maillage du sol selon un plan en deux dimensions caractérisé par les mailles sol Ms(i,j) ainsi qu'un réseau de plots obstacles Poₙ(i,j) sont obtenus.

Enfin, au cours d'une sixième étape 16 d'affichage, on affiche sur le moyen d'affichage 5 les mailles sol Ms(i,j) et/ou les plots obstacles Poₙ(i,j) présentant ainsi à l'équipage de l'aéronef 8 de façon simple les obstacles potentiels hors sol.

De la sorte, cet équipage de l'aéronef 8 peut alors analyser et interpréter ce réseau de plots obstacles Poₙ(i,j) afin d'identifier les obstacles hors sol tels que des câbles électriques ou bien des pylônes pouvant se trouver dans l'environnement de l'aéronef 8.

Un plot obstacle Poₙ(i,j) associé à une maille sol Ms(i,j) est ainsi affiché à partir de leur altitude Zₙ(i,j). Cependant, les dimensions d'une maille sol Ms(i,j) pouvant être importantes, les plots obstacles Poₙ(i,j) peuvent être affichés à partir de leurs coordonnées tridimensionnelles dans le repère géographique terrestre. Cet affichage des plots obstacles Poₙ(i,j) à partir de leurs coordonnées tridimensionnelles permet de plus de différentier plusieurs plots obstacles Poₙ(i,j) associés à une même maille sol Ms(i,j) comme c'est le cas pour les plots Po₁,Po₂,Po₃ associés à la maille sol Ms(i₂,j₃).

Le moyen d'affichage 5 peut être un écran affichant en deux dimensions et en perspective le plan horizontal représentatif du sol et le réseau des plots obstacles Poₙ(i,j). Ce moyen d'affichage 5 peut également être un écran affichant ces éléments en trois dimensions ou bien un affichage tête moyenne ou tête haute.

Selon deux variantes du procédé de détection et de visualisation du sol et des obstacles, des conditions d'affichage sont ajoutées aux plots obstacles Poₙ(i,j) selon leurs altitudes Zₙ(i,j) respectives pour permettre ou non leurs présentations sur le moyen d'affichage 5.

Ainsi, selon une première variante de ce procédé, chaque plot obstacle Poₙ(i,j) ayant une différence d'altitude entre l'altitude Zₙ(i,j) de ce plot obstacle Poₙ(i,j) et l'altitude minimale Zmin(i,j) de la maille sol Ms(i,j) correspondant à ce plot obstacle Poₙ(i,j) inférieure à un premier seuil est ignoré lors de la sixième étape 16 d'affichage et, par suite, non présenté sur le moyen d'affichage 5. Le premier seuil est par exemple égal à 30 pieds (30 ft).

De même, selon une seconde variante de ce procédé, chaque plot obstacle Poₙ(i,j) ayant une différence d'altitude entre l'altitude Zₙ(i,j) de ce plot obstacle Poₙ(i,j) et l'altitude minimale Zmin(i,j) de la maille sol Ms(i,j) correspondant à ce plot obstacle Poₙ(i,j) supérieure à un second seuil est ignoré lors de la sixième étape 16 d'affichage et, par suite, non présenté sur le moyen d'affichage 5. Le second seuil est par exemple égal à 500 pieds (500 ft).

En outre, chaque maille sol Ms(i,j) peut former un modèle numérique de terrain MNT et l'altitude minimale Zmin(i,j) initiale de cette maille sol Ms(i,j) est l'altitude du modèle numérique de terrain MNT.

Avantageusement, les plots obstacles Poₙ(i,j) sont affichés simplement sur le moyen d'affichage 5 et notamment sans traitement d'images et de reconnaissances de formes. Par suite, le procédé de détection et de visualisation du sol et des obstacles selon l'invention permet d'afficher en temps réel les plots obstacles Poₙ(i,j) en limitant l'utilisation des ressources de calcul de l'unité de traitement 4.

Naturellement, la présente invention est sujette à de nombreuses variations quant à sa mise en oeuvre. Bien que plusieurs modes de réalisation aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention.

## Revendications

1. Procédé de détection et de visualisation du sol et des obstacles à partir d'un moyen de détection (9) destiné à équiper un véhicule (8), ledit moyen de détection (9) envoyant des signaux de mesures et recevant une pluralité de plots élémentaires (Pe) exprimés sous forme de coordonnées tridimensionnelles, lesdits plots élémentaires (Pe) étant représentatifs d'au moins une partie de l'environnement dudit véhicule (8), ledit procédé comprenant :
- une première étape (11) de maillage dudit sol en deux dimensions selon un plan horizontal avec des mailles sol (Ms(i,j)), chaque maille sol (Ms(i,j)) étant formée par un plot élémentaire (Pe) d'altitude (Z_{Pe}), ledit plot élémentaire (Pe) étant le plot élémentaire (Pe) correspondant à ladite maille sol Ms(i,j) dont ladite altitude Z_{Pe} est une altitude minimale (Zmin(i,j)),
- une seconde étape (12) de création d'un réseau de plots obstacles (Poₙ(i,j)), chaque plot élémentaire (Pe) correspondant à une maille sol (Ms(i,j)) et ayant une altitude (Z_{Pe}) supérieure à ladite altitude minimale (Zmin(i,j)) de ladite maille sol (Ms(i,j)) formant un plot obstacle (Poₙ(i,j)),
- une troisième étape (13) de mémorisation desdites mailles sol (Ms(i,j)), chaque maille sol (Ms(i,j)) étant mémorisée avec ladite altitude minimale (Zmin(i,j)),
- une quatrième étape (14) de mémorisation desdits plots obstacles (Poₙ(i,j)), chaque plot obstacle (Poₙ(i,j)) étant mémorisé avec une altitude (Zₙ(i,j)) égale à ladite altitude (Z_{Pe}),
- une cinquième étape (15) de comparaison de chaque maille sol (Ms(i,j)) avec chaque plot élémentaire (Pe) nouvellement reçu d'altitude (Z_{Pe}) et correspondant à ladite maille sol (Ms(i,j)) telle que,
∘ si aucune altitude minimale (Zmin(i,j)) n'est mémorisée pour ladite maille sol (Ms(i,j)), ladite altitude Z_{Pe} dudit plot élémentaire (Pe) nouvellement reçu est mémorisée pour ladite maille sol (Ms(i,j)) en tant qu'altitude minimale (Zmin(i,j)),
∘ si ladite altitude (Z_{Pe}) dudit plot élémentaire (Pe) nouvellement reçu est supérieure à ladite altitude minimale (Zmin(i,j)) de ladite maille sol (Ms(i,j)), ledit plot élémentaire (Pe) nouvellement reçu est mémorisé en tant que plot obstacle (Poₙ(i,j)) avec une altitude Zₙ(i,j) égale à ladite altitude Z_{Pe} dudit plot élémentaire Pe nouvellement reçu, ladite altitude minimale (Zmin(i,j)) de ladite maille sol (Ms(i,j)) étant inchangée,
∘ si ladite altitude (Z_{Pe}) dudit plot élémentaire (Pe) nouvellement reçu est inférieure à ladite altitude minimale (Zmin(i,j)) de ladite maille sol (Ms(i,j)), un plot obstacle (Poₙ(i,j)) est mémorisé avec une altitude (Zₙ(i,j)) égale à ladite altitude minimale (Zmin(i,j)) et ladite altitude (Z_{Pe}) dudit plot élémentaire (Pe) nouvellement reçu est mémorisée en tant que nouvelle altitude minimale (Zmin(i,j)) de ladite maille sol (Ms(i,j)),
∘ si ladite altitude (Z_{Pe}) dudit plot élémentaire (Pe) nouvellement reçu est égale à ladite altitude minimale (Zmin(i,j)) de ladite maille sol (Ms(i,j)), ledit plot élémentaire (Pe) nouvellement reçu est ignoré,
- une sixième étape (16) d'affichage desdits plots obstacles (Poₙ(i,j)).

2. Procédé selon la revendication 1,
**caractérisé en ce que** chaque plot obstacle (Poₙ(i,j)) ayant une différence d'altitude entre ladite altitude (Zₙ(i,j)) et ladite altitude minimale (Zmin(i,j)) de ladite maille sol (Ms(i,j)) correspondant audit plot obstacle (Poₙ(i,j)) inférieure à un premier seuil est ignoré lors de ladite sixième étape (16) d'affichage.

3. Procédé selon l'une quelconque des revendications 1 à 2,
**caractérisé en ce que** chaque plot obstacle (Poₙ(i,j)) ayant une différence d'altitude entre ladite altitude (Zₙ(i,j)) et ladite altitude minimale (Zmin(i,j)) de ladite maille sol (Ms(i,j)) correspondant audit plot obstacle (Poₙ(i,j)) supérieure à un second seuil est ignoré lors de ladite sixième étape (16) d'affichage.

4. Procédé selon l'une quelconque des revendications 1 à 3,
**caractérisé en ce que** chaque maille sol (Ms(i,j)) a la forme d'un carré dont les dimensions varient selon la position dudit véhicule (8) par rapport au sol.

5. Procédé selon l'une quelconque des revendications 1 à 3,
**caractérisé en ce que** chaque maille sol (Ms(i,j)) a la forme d'un carré dont chaque côté correspond à 10 mètres au sol.

6. Procédé selon l'une quelconque des revendications 2 à 5,
**caractérisé en ce que** ledit premier seuil est égal à 30 pieds.

7. Procédé selon l'une quelconque des revendications 3 à 6,
**caractérisé en ce que** ledit second seuil est égal à 500 pieds.

8. Procédé selon l'une quelconque des revendications 1 à 7
**caractérisé en ce qu'**au cours de ladite sixième étape (16) d'affichage, on affiche chaque maille sol Ms(i,j) en prenant en compte ladite altitude minimale Zmin(i,j) associée à ladite maille sol Ms(i,j), formant ainsi un maillage en trois dimensions représentant le sol.

9. Procédé selon l'une quelconque des revendications 1 à 7,
**caractérisé en ce qu'**une étape préliminaire (10) de transformation desdites coordonnées tridimensionnelles desdits plots élémentaires (Pe) est réalisée préalablement à ladite première étape (11) afin de transformer lesdites coordonnées tridimensionnelles desdits plots élémentaires (Pe) d'un repère lié audit véhicule (8) à un repère géographique terrestre.

10. Programme comportant un code fixé sur un support ou matérialisé par un signal, le code étant lisible ou exécutable par une unité de traitement (4) de données et destiné à équiper un véhicule (8) afin de traiter une pluralité de plots élémentaires (Pe) reçus par un moyen de détection (9),
**caractérisé en ce que** ledit code comporte des segments de code afin d'effectuer lesdites étapes (10,11,12,13,14,15) du procédé selon l'une quelconque des revendications 1 à 9.

11. Dispositif (1) de détection et de visualisation du sol et des obstacles, ce dispositif (1), destiné à équiper un véhicule (8), comprenant un moyen de détection (9) recevant une pluralité de plots élémentaires (Pe), un système de référence et de cap (2), un système de localisation (3) ainsi qu'une unité de traitement (4), au moins un moyen de mémorisation (6,7) et un moyen d'affichage (5),
**caractérisé en ce que** ledit dispositif (1) de détection et de visualisation du sol et des obstacles met en oeuvre le procédé selon l'une quelconque des revendications 1 à 9.

## Patentansprüche

1. Verfahren zur Erfassung und Anzeige des Bodens und von Hindernissen ausgehend von einem Erfassungsmittel (9), das dazu bestimmt ist, ein Fahrzeug (8) auszurüsten, wobei das Erfassungsmittel (9) Messsignale aussendet und eine Mehrzahl von Elementarparzellen (Pe) empfängt, die in Form von dreidimensionalen Koordinaten ausgedrückt sind, wobei die Elementarparzellen (Pe) repräsentativ sind für mindestens einen Teil der Umgebung des Fahrzeugs (8), wobei das Verfahren aufweist:
- einen ersten Schritt (11) der Vernetzung des Bodens in zwei Dimensionen in einer horizontalen Ebene mit Bodenzellen (Ms(i,j)), wobei jede Bodenzelle (Ms(i,j)) aus einer Elementarparzelle (Pe) der Höhe (Z_{Pe}) gebildet ist, wobei die Elementarparzelle (Pe) die Elementarparzelle (Pe) ist, die der Bodenzelle (Ms(i,j)) entspricht, deren Höhe Z_{Pe} eine minimale Höhe (Zmin(i,j)) ist,
- einen zweiten Schritt (12) der Bildung eines Netzes aus Hindernisparzellen (Pon(i,j)), wobei jede Elementarparzelle (Pe) einer Bodenzelle (Ms(i,j)) entspricht und eine Höhe (Z_{Pe}) aufweist, die größer als die minimale Höhe (Zmin(i,j)) der Bodenzelle (Ms(i,j)) ist, die eine Hindernisparzelle (Poₙ(i,j)) bildet,
- einen dritten Schritt (13) der Speicherung der Bodenzellen (Ms(i,j)), wobei jede Bodenzelle (Ms(i,j)) mit der minimalen Höhe (Zmin(i,j)) gespeichert wird,
- einen vierten Schritt (14) der Speicherung der Hindernisparzellen (Poₙ(i,j)), wobei jede Hindernisparzelle (Poₙ(i,j)) mit einer Höhe (Zₙ(i,j)) gespeichert wird, die gleich der Höhe (Z_{Pe}) ist,
- einen fünften Schritt (15) des Vergleichs jeder Bodenzelle (Ms(i,j)) mit jeder neu erhaltenen Elementarparzelle (Pe) mit einer Höhe (Z_{Pe}), die der Bodenzelle (Ms(i,j)) entspricht, derart, dass,
∘ wenn für die Bodenzelle (Ms(i,j)) keine minimale Höhe (Zmin(i,j)) gespeichert ist, die Höhe (Z_{Pe}) der neu erhaltenen Elementarparzelle (Pe) für die Bodenzelle (Ms(i,j)) als minimale Höhe (Zmin(i,j)) gespeichert wird,
∘ wenn die Höhe (Z_{Pe}) der neu erhaltenen Elementarparzelle (Pe) größer ist als die minimale Höhe (Zmin(i,j)) der Bodenzelle (Ms(i,j)), die neu erhaltene Elementarparzelle (Pe) als Hindernisparzelle (Poₙ(i,j)) gespeichert wird mit einer Höhe Zₙ(i,j), die gleich der Höhe Z_{Pe} der neu erhaltenen Elementarparzelle Pe ist, wobei die minimale Höhe (Zmin(i,j)) der Bodenzelle (Ms(i,j)) unverändert bleibt,
∘ wenn die Höhe (Z_{Pe}) der neu erhaltenen Elementarparzelle (Pe) kleiner ist als die minimale Höhe (Zmin(i,j)) der Bodenzelle (Ms(i,j)), eine Hindernisparzelle (Poₙ(i,j)) gespeichert wird mit einer Höhe (Zₙ(i,j)), die gleich der minimalen Höhe (Zmin(i,j)) ist, und die Höhe (Z_{Pe}) der neu erhaltenen Elementarparzelle (Pe) als neue minimale Höhe (Zmin(i,j)) der Bodenzelle (Ms(i,j)) gespeichert wird,
∘ wenn die Höhe (Z_{Pe}) der neu erhaltenen Elementarparzelle (Pe) gleich der minimalen Höhe (Zmin(i,j)) der Bodenzelle (Ms(i,j)) ist, die neu erhaltene Elementarparzelle (Pe) ignoriert wird, wobei
- ein sechster Schritt (16) der Anzeige der Hindernisparzellen (Pon(i,j)) vorgesehen ist.

2. Verfahren nach Anspruch 1,
**dadurch gekennzeichnet, dass** während des sechsten Schritts (16) der Anzeige jede Hindernisparzelle (Pon(i,j)), die einen Höhenunterschied aufweist zwischen der Höhe (Zₙ(i,j)) und der minimalen Höhe (Zmin(i,j)) der Bodenzelle (Ms(i,j)), die der Hindernisparzelle (Poₙ(i,j) entspricht, der kleiner als ein erster Schwellenwert ist, ignoriert wird.

3. Verfahren nach einem der Ansprüche 1 bis 2,
**dadurch gekennzeichnet, dass** während des sechsten Schritts (16) der Anzeige jede Hindernisparzelle (Poₙ(i,j)), die einen Höhenunterschied aufweist zwischen der Höhe (Zₙ(i,j)) und der minimalen Höhe (Zmin(i,j)) der Bodenzelle (Ms(i,j)), die der Hindernisparzelle (Poₙ(i,j)) entspricht, der größer als ein zweiter Schwellenwert ist, ignoriert wird.

4. Verfahren nach einem der Ansprüche 1 bis 3,
**dadurch gekennzeichnet, dass** jede Bodenzelle (Ms(i,j)) die Form eines Rechtecks aufweist, dessen Abmessungen sich je nach Position des Fahrzeugs (8) relativ zum Boden ändern.

5. Verfahren nach einem der Ansprüche 1 bis 3,
**dadurch gekennzeichnet, dass** jede Bodenzelle (Ms(i,j)) die Form eines Rechtecks aufweist, dessen Seitenlänge auf dem Boden 10 Metern entspricht.

6. Verfahren nach einem der Ansprüche 2 bis 5,
**dadurch gekennzeichnet, dass** der erste Schwellenwert 30 Fuß (ca. 9 m) beträgt.

7. Verfahren nach einem der Ansprüche 3 bis 6,
**dadurch gekennzeichnet, dass** der zweite Schwellenwert 500 Fuß (ca. 150 m) beträgt.

8. Verfahren nach einem der Ansprüche 1 bis 7,
**dadurch gekennzeichnet, dass** während des sechsten Schritts (16) der Anzeige jede Bodenzelle (Ms(i,j)) angezeigt wird, indem jede minimale Höhe (Zmin(i,j)), die mit der Bodenzelle (Ms(i,j)) verbunden ist, berücksichtigt wird, wodurch somit eine dreidimensionale Vernetzung gebildet wird, die den Boden darstellt.

9. Verfahren nach einem der Ansprüche 1 bis 7,
**dadurch gekennzeichnet, dass** vor dem ersten Schritt (11) ein vorläufiger Schritt (10) der Umwandlung der dreidimensionalen Koordinaten der Elementarparzellen (Pe) vorgenommen wird, um die dreidimensionalen Koordinaten der Elementarparzellen (Pe) eines mit dem Fahrzeug (8) verbundenen Festpunktes in einen geographischen Bodenfestpunkt umzuwandeln.

10. Programm, welches auf einem Träger installiert ist oder durch ein Signal verwirklicht ist, wobei das Programm durch eine Datenverarbeitungseinheit (4) lesbar oder ausführbar ist, und welches dazu bestimmt ist, ein Fahrzeug (8) auszurüsten, um eine Mehrzahl von einem Erfassungsmittel (9) empfangener Elementarparzelle (Pe) zu verarbeiten,
**dadurch gekennzeichnet, dass** das Programm Programmabschnitte aufweist, um die Schritte (10, 11, 12, 13, 14, 15) des Verfahrens nach einem der Ansprüche 1 bis 9 auszuführen.

11. Vorrichtung (1) zur Erfassung und Anzeige des Bodens und von Hindernissen, wobei die Vorrichtung (1), die vorgesehen ist, um ein Fahrzeug (8) auszurüsten, ein Erfassungsmittel (9) aufweist, welches eine Mehrzahl von Elementarparzellen (Pe) aufweist, ein Bezugssystem und Kurssystem (2), ein Lokalisierungssystem (3), sowie eine Verarbeitungseinheit (4), mindestens ein Speichermittel (6, 7) und ein Anzeigemittel (5),
**dadurch gekennzeichnet, dass** die Vorrichtung (1) zur Erfassung und Anzeige des Bodens und von Hindernissen das Verfahren nach einem der Ansprüche 1 bis 9 ausführt.

## Claims

1. Method for detection and visualisation of the ground and obstacles by detection means (9) intended to be installed on board a vehicle (8), said detection means (9) sending measurement signals and receiving a plurality of elementary plots (Pe) expressed in the form of three-dimensional coordinates, said elementary plots (Pe) representing at least part of the environment of said vehicle (8), said method comprising:
- a first stage (11) for the creation of a two-dimensional grid of said ground along a horizontal plane with ground cells (Ms(i,j)), each ground cell (Ms(i,j)) being formed by an elementary plot (Pe) of altitude (Z_{Pe}), said elementary plot (Pe) being the elementary plot (Pe) corresponding to said ground cell (Ms(i,j)) whose altitude (Z_{Pe}) is a minimum altitude (Zmin(i,j)),
- a second stage (12) for the creation of a network of obstacle plots (Poₙ(i,j)), each elementary plot (Pe) corresponding to a ground cell (Ms(i,j)) and having an altitude (Z_{Pe}) greater than the minimum altitude (Zmin(i,j)) of said ground cell (Ms(i,j)) forming an obstacle plot (Poₙ(i,j)),
- a third stage (13) for the storage in memory of said ground cells (Ms(i,j)), each ground cell (Ms(i,j)) being stored in memory with said minimum altitude (Zmin(i,j)),
- a fourth stage (14) for the storage in memory of said obstacle plots (Poₙ(i,j)), each obstacle plot (Poₙ(i,j)) being stored in memory with an altitude (Zₙ(i,j)) equal to said altitude (Z_{Pe}),
- a fifth stage (15) for comparison of each ground cell (Ms(i,j)) with each newly received elementary plot (Pe) of altitude (Z_{Pe}) and corresponding to said ground cell (Ms(i,j)) such that,
∘ if no minimum altitude (Zmin(i,j)) is stored in memory for said ground cell (Ms(i,j)), said altitude (Z_{Pe}) of said newly received elementary plot (Pe) is stored in memory for said ground cell (Ms(i,j)) as the minimum altitude (Zmin(i,j)),
∘ if said altitude (Z_{Pe}) of said newly received elementary plot (Pe) is greater than said minimum altitude (Zmin(i,j)) of said ground cell (Ms(i,j)), said newly received elementary plot (Pe) is stored in memory as an obstacle plot (Poₙ(i,j)) with an altitude (Zₙ(i,j)) equal to said altitude (Z_{Pe}) of said newly received elementary plot (Pe), said minimum altitude (Zmin(i,j)) of said ground cell (Ms(i,j)) remaining unchanged,
∘ if said altitude (Z_{Pe}) of said newly received elementary plot (Pe) is less than said minimum altitude (Zmin(i,j)) of said ground cell (Ms(i,j)), an obstacle plot (Poₙ(i,j)) is stored in memory with an altitude (Zₙ(i,j)) equal to said minimum altitude (Zmin(i,j)), and said altitude (Z_{Pe}) of said newly received elementary plot (Pe) is stored in memory as the new minimum altitude (Zmin(i,j)) of said ground cell (Ms(i,j)),
∘ if said altitude (Z_{Pe}) of said newly received elementary plot (Pe) is equal to said minimum altitude (Zmin(i,j)) of said ground cell (Ms(i,j)), said newly received elementary plot (Pe) is ignored,
- a sixth stage (16) for the display of said obstacle plots (Poₙ(i,j)).

2. Method according to claim 1,
**characterised in that** each obstacle plot (Poₙ(i,j)) having a difference in altitude between said altitude (Zn(i,j)) and said minimum altitude (Zmin(i,j)) of said ground cell (Ms(i,j)) corresponding to said obstacle plot (Poₙ(i,j)) less than a first threshold is ignored during said sixth stage (16) for the display.

3. Method according any one of claims 1 to 2,
**characterised in that** each obstacle plot (Poₙ(i,j)) having a difference in altitude between said altitude (Zn(i,j)) and said minimum altitude (Zmin(i,j)) of said ground cell (Ms(i,j)) corresponding to said obstacle plot (Poₙ(i,j)) greater than a second threshold is ignored during said sixth stage (16) for the display.

4. Method according to any one of claims 1 to 3,
**characterised in that** each ground cell (Ms(i,j)) is in the form of a square whose dimensions vary depending on the position of said vehicle (8) with respect to the ground.

5. Method according to any one of claims 1 to 3,
**characterised in that** each ground cell (Ms(i,j)) is in the form of a square, each of whose sides corresponds to 10 metres on the ground.

6. Method according to any one of claims 2 to 5,
**characterised in that** said first threshold is equal to 30 feet.

7. Method according to any one of claims 3 to 6,
**characterised in that** said second threshold is equal to 500 feet.

8. Method according to any one of claims 1 to 7,
**characterised in that** during said sixth stage (16) for the display, each ground cell (Ms(i,j)) is displayed taking into consideration said minimum altitude (Zmin(i,j)) associated with said ground cell (Ms(i,j)), thereby forming a three-dimensional grid representing the ground.

9. Method according to any one of claims 1 to 7,
**characterised in that** a preliminary stage (10) for the conversion of said three-dimensional coordinates of said elementary plots (Pe) is performed prior to said first stage (1), in order to convert said three-dimensional coordinates of said elementary plots (Pe) of a reference mark linked to said vehicle (8) into a ground-based geographic reference mark.

10. Program containing a code stored on a medium or embodied in a signal, the code being readable or executable by a data-processing unit (4) intended to be installed on board a vehicle (8) in order to process a plurality of elementary plots (Pe) received by a detection means (9),
**characterised in that** said code comprises code segments in order to carry out said stages (10,11,12,13,14,15) of the method according to any one of claims 1 to 9.

11. Device (1) for the detection and visualisation of the ground and of obstacles, this device (1), intended to be installed on board a vehicle (8), comprising a detection means (9) receiving a plurality of elementary plots (Pe), a reference and course heading system (2), a location system (3), as well as a processing unit (4), at least one memory storage means (6,7) and a display means (5),
**characterised in that** said device (1) for the detection and visualisation of the ground and of obstacles implements the method according to any one of claims 1 to 9.
